# FASCICULE DE BREVET EUROPEEN

(11) **EP 3 499 541 B1**
(45) Date de publication et mention de la délivrance du brevet: **03.06.2020**
(21) Numéro de dépôt: 18212366.1
(22) Date de dépôt: 13.12.2018
(51) Int. Cl.: H01H 71/12, H01H 39/00, H01H 89/08

(54) **APPAREIL DE PROTECTION ÉLECTRIQUE COMPORTANT UN SYSTÈME D'ACTIONNEMENT PYROTECHNIQUE**
ELEKTRISCHES SCHUTZGERÄT, DAS EIN PYROTECHNISCHES BETÄTIGUNGSSYSTEM UMFASST
ELECTRICAL PROTECTION APPARATUS COMPRISING A PYROTECHNICAL ACTUATION SYSTEM

(30) Priorité: 14.12.2017 FR 1762147
(43) Date de publication de la demande: 19.06.2019
(73) Titulaire: Schneider Electric Industries SAS, 92500 Rueil Malmaison (FR)
(72) Inventeur: RIVAL, Marc, 38050 GRENOBLE Cedex 09 (FR); DOMENECH, Cyril, 38050 GRENOBLE Cedex 09 (FR); ROTA, Daniel, 38050 GRENOBLE Cedex 09 (FR)
(74) Mandataire: Lavoix

(56) Documents cités:
- EP-A2- 1 876 627
- WO-A2-2011/116985
- US-A- 4 176 385

## Description

La présente invention concerne un appareil de protection électrique comportant un système d'actionnement pyrotechnique.

L'invention concerne plus généralement le domaine technique de la protection des installations électriques.

Dans certaines applications, il est nécessaire de pouvoir interrompre un courant électrique très rapidement dès l'apparition d'un défaut électrique, par exemple avec un délai inférieur ou égal à une milliseconde.

Il est connu d'utiliser des éléments fusibles ultra-rapides, qui fondent très rapidement lors de l'apparition d'un défaut électrique, tel qu'un courant de court-circuit, de manière à interrompre la circulation du courant. Un tel appareil de protection est connu du document EP 1 876 627 A2.

Néanmoins, il existe des applications pour lesquelles ces éléments fusibles ultra-rapides ne sont pas appropriés et ne donnent pas entière satisfaction. Par exemple, ils ne permettent pas toujours de répondre de façon satisfaisante à un défaut électrique de type courant de court-circuit, notamment pour certaines gammes de calibre de courant.

Il existe également des appareils de protection électrique à contacts séparables, tels que des disjoncteurs. Mais ils font appel à un mécanisme d'ouverture qui n'est pas toujours suffisamment rapide.

C'est à ces inconvénients qu'entend plus particulièrement remédier l'invention, en proposant un appareil de protection électrique qui présente une réponse rapide lors de l'apparition d'un défaut électrique.

A cet effet, l'invention concerne un appareil de protection électrique multipolaire comportant :
- un bloc de coupure à contacts séparables, destiné à interrompre la circulation d'un courant électrique entre des terminaux de raccordement, ce bloc de coupure comportant, pour chaque pôle de l'appareil de protection, des contacts électriques fixes et un contact électrique mobile porté par au moins un doigt de contact (déplaçable ;
- un mécanisme de commutation apte à déplacer les doigts de contact ;
- un système de déclenchement électronique qui pilote le mécanisme de commutation, ce système de déclenchement étant configuré pour déclencher le mécanisme de commutation lorsqu'il détecte un défaut électrique ;
l'appareil de protection étant caractérisé en ce qu'il comporte en outre un système d'actionnement pyrotechnique incluant :
- au moins un actionneur pyrotechnique, chaque actionneur pyrotechnique comportant une charge explosive et une partie mobile qui se déplace depuis une position rétractée vers une position déployée lorsque la charge explose ;
- des percuteurs placés en regard des doigts de contact, chaque percuteur étant déplaçable entre une position de repos et une position appuyée dans laquelle il pousse un doigt de contact pour séparer le contact mobile correspondant des contacts fixes ;
- un système de transmission de mouvement configuré pour transformer le déplacement de la partie mobile de sa position rétractée vers sa position déployée en un déplacement simultané de l'ensemble des percuteurs depuis leur position de repos vers leur position appuyée ;
et en ce que le système de déclenchement est en outre configuré pour activer un des actionneurs pyrotechniques lorsqu'il détecte un défaut électrique.

Grâce à l'invention, l'appareil de protection réagit plus rapidement pour interrompre la circulation du courant électrique en cas d'apparition d'un défaut de type courant de court-circuit. En effet, le système d'actionnement pyrotechnique permet de déplacer les doigts de contacts plus rapidement que le mécanisme de commutation. En d'autres termes, le système d'actionnement pyrotechnique agit comme un dispositif de déclenchement parallèle qui est plus rapide que le mécanisme de commutation.

Le système d'actionnement pyrotechnique permet donc de bénéficier d'une protection améliorée contre certains types de défaut électrique, plus particulièrement les court-circuits, pour des courants d'intensité supérieure ou égale à six fois le courant nominal In de l'appareil de protection, tout en conservant par ailleurs l'architecture classique du bloc de coupure de l'appareil de protection.

Selon des aspects avantageux mais non obligatoires de l'invention, un tel appareil de protection électrique peut incorporer une ou plusieurs des caractéristiques suivantes, prises isolément ou suivant toute combinaison techniquement admissible :
- Le système d'actionnement pyrotechnique est réarmable et comporte à cet effet au moins deux actionneurs pyrotechniques, le système de déclenchement étant en outre configuré pour, lorsqu'il détecte le défaut électrique, activer un actionneur pyrotechnique parmi le ou les actionneurs pyrotechniques qui n'ont pas déjà été activés.
- Le système de déclenchement comporte une unité de commande principale et une unité de commande auxiliaire, le pilotage du mécanisme de commutation étant assuré par l'unité de commande principale et l'activation d'un des actionneurs pyrotechniques, en réponse à la détection d'un défaut électrique, étant réalisé par l'unité de commande auxiliaire.

- Le système de transmission de mouvement comporte :
   - un arbre monté en rotation par rapport à un palier fixé sur un support du système d'actionnement pyrotechnique ;
   - des bielles qui relient les percuteurs à l'arbre ; et
   - au moins un levier fixé à l'arbre, chaque levier étant pourvu d'une surface d'appui destinée à coopérer avec la partie mobile d'un actionneur pyrotechnique.
- Le système d'actionnement pyrotechnique est monté sur une face extérieure d'un boîtier entourant le bloc de coupure, en ce que la face extérieure est pourvue d'orifices traversants et en ce que chaque orifice est placé en regard d'un doigt de contact du bloc de coupure et autorise le passage d'un percuteur correspondant.
- Chaque orifice est pourvu d'un joint d'étanchéité.
- Chaque percuteur comporte un corps principal et une partie d'extrémité (solidaire du corps principal et destinée à percuter un doigt de contact correspondant lorsque le percuteur se déplace vers sa position appuyée, le corps principal étant électriquement isolant.
- Chaque percuteur présente une forme allongée s'étendant selon un axe longitudinal, en ce que l'extrémité distale du corps principal comporte un épaulement formant une surface d'appui sur laquelle est reçue l'extrémité correspondante de la partie d'extrémité, la partie d'extrémité et le corps principal étant fixés l'un à l'autre au moyen d'éléments de fixation disposés transversalement par rapport à l'axe longitudinal.
- La partie d'extrémité est réalisée en métal, de préférence en acier.
- Le système de transmission de mouvement comporte un organe de rappel élastique, tel qu'un ressort, adapté pour exercer une force de rappel qui ramène les percuteurs vers leur position de repos.

L'invention sera mieux comprise et d'autres avantages de celle-ci apparaîtront plus clairement à la lumière de la description qui va suivre, d'un mode de réalisation d'un appareil de protection électrique donné uniquement à titre d'exemple et faite en référence aux dessins annexés dans lesquels :
- la figure 1 est un schéma synoptique illustrant un appareil de protection électrique comportant un système d'actionnement pyrotechnique selon des modes de réalisation de l'invention ;
- la figure 2 est une illustration schématique, selon une vue en perspective, d'un exemple du système d'actionnement pyrotechnique de la figure 1 ;
- la figure 3 est une illustration schématique, selon une vue en perspective, d'une partie d'un exemple de l'appareil de protection électrique de la figure 1 ;
- la figure 4 est une illustration schématique, selon une vue en coupe longitudinale, de l'appareil de protection de la figure 1, dans lequel le système d'actionnement pyrotechnique est dans un état non-déclenché ;
- la figure 5 est une illustration schématique, selon une vue en coupe longitudinale, de l'appareil de protection de la figure 1, dans lequel le système d'actionnement pyrotechnique est dans un état déclenché.

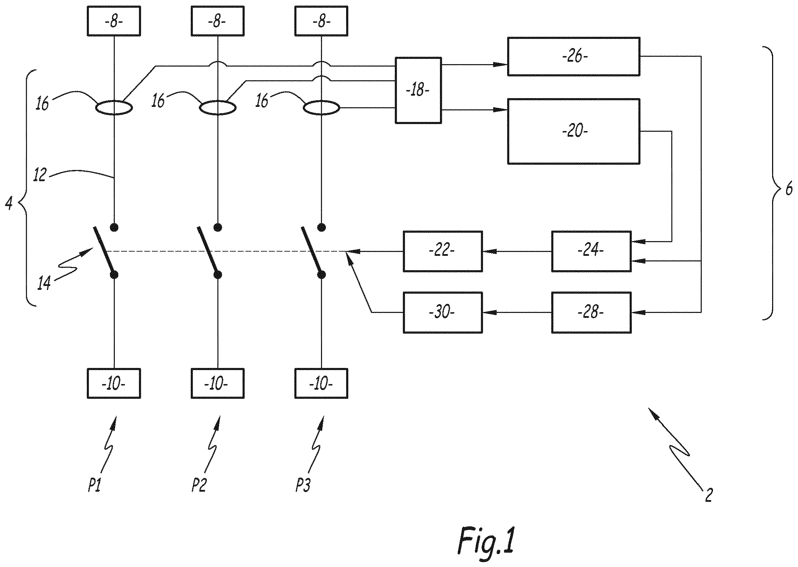

La figure 1 représente un appareil de protection électrique 2, tel qu'un disjoncteur.

L'appareil 2 est destiné à protéger une installation électrique contre des défauts électriques, tels que des courts circuits et des courants de surcharge.

L'appareil 2 est multipolaire. Il est ainsi destiné à protéger une installation électrique polyphasée. Dans l'exemple illustré, l'appareil 2 comporte trois pôles électriques notés P1, P2, P3.

Selon des modes de réalisation, l'appareil 2 est un disjoncteur limiteur capable d'interrompre des courants nominaux d'intensité comprise entre 600 A et 2000 A.

L'appareil 2 comporte un bloc de coupure 4 à contacts séparables et un système de déclenchement 6 électronique.

Le bloc de coupure 4 est destiné à interrompre la circulation d'un courant électrique circulant entre des terminaux de raccordement 8 et 10 de l'appareil 2.

Comme illustré sur les figures 1, 4 et 5, le bloc de coupure 4 comporte, pour chaque pôle P1, P2, P3, des contacts électriques fixes 12 et un contact électrique mobile 14 porté par au moins un doigt de contact 15 déplaçable.

Par exemple, chaque doigt 15 est monté pivotant par rapport à une armature fixe du bloc de coupure 4.

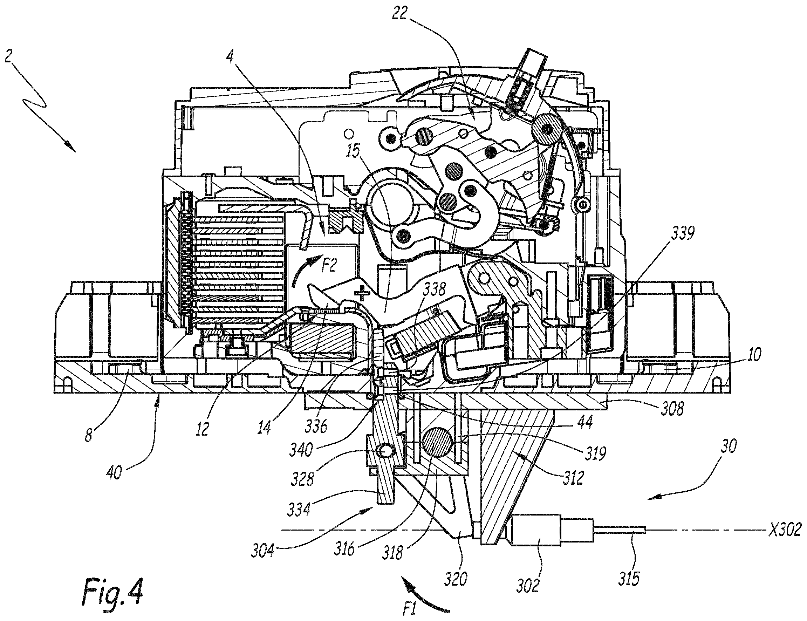

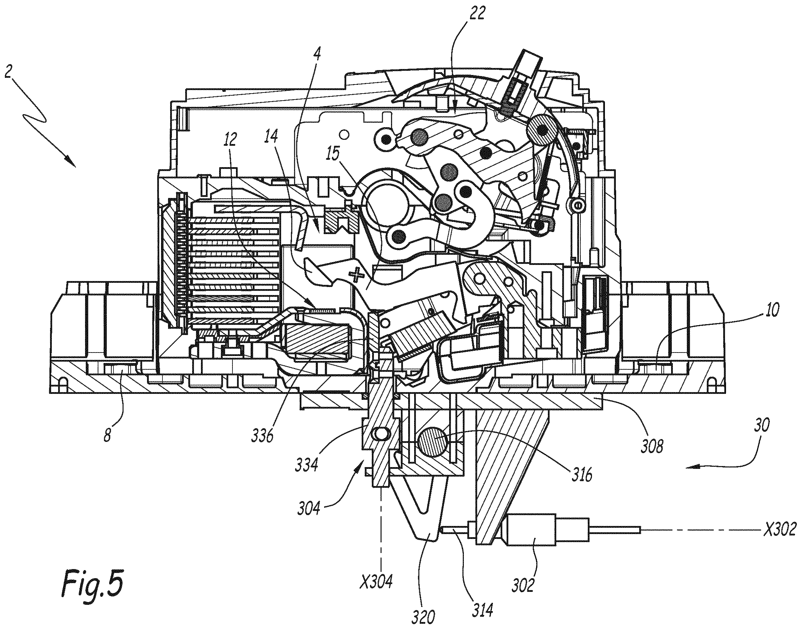

Dans le mode de mise en œuvre illustré, seul un doigt 15 est visible sur les coupes des figures 4 et 5. En pratique, cependant, plusieurs doigts 15 analogues et connectés mécaniquement parallèlement les uns aux autres peuvent être groupés au sein d'un même pôle P1, P2, P3 avec un même contact mobile 14. Le nombre de doigts 15 est par exemple supérieur ou égal à un ou supérieur ou égal à deux et, typiquement, inférieur ou égal à 10 ou inférieur ou égal à 5.

L'appareil 2 comporte également un mécanisme de commutation 22 et un système d'actionnement pyroélectrique 30.

Le mécanisme 22 est couplé mécaniquement aux doigts de contact 15, de manière à les déplacer réversiblement entre des positions dites fermée et ouverte pour mettre en contact ou, en alternance, isoler les contacts 12 et 14 lorsqu'il est commandé à cet effet.

Le système d'actionnement pyroélectrique 30 est adapté pour agir sur les doigts de contact 15 de manière à séparer les contacts 12 et 14 lorsqu'il est commandé à cet effet.

En d'autres termes, le système d'actionnement pyroélectrique 30 permet de commander l'ouverture de l'appareil 2 indépendamment du mécanisme de commutation 22.

Le système de déclenchement 6 est configuré pour détecter un défaut électrique et pour, en réponse, déclencher la séparation des contacts 12 et 14 dans le but d'interrompre la circulation du courant entre les terminaux 8 et 10, notamment en déclenchant un mouvement correspondant du mécanisme 22. Ainsi, le système 6 pilote le mécanisme 22.

Par exemple, le système 6 comporte des capteurs de courant 16, chacun adapté pour mesurer une ou plusieurs grandeurs physiques relatives au courant électrique qui circule au niveau d'un pôle P1, P2, P3, et une unité électronique de mesure 18 qui collecte les signaux de mesure générés par les capteurs 16. Dans cet exemple, les capteurs 16 sont des tores de Rogowski.

Le système 6 comporte en outre :
- une unité de commande électronique principale 20, programmée pour piloter le mécanisme de commutation 22, et pour détecter l'apparition d'un défaut électrique, par exemple en fonction des valeurs de courants mesurés par les capteurs 16,
- un actionneur électromagnétique 24 qui couple l'unité 20 au mécanisme de commutation 22 et
- un circuit d'allumage 28 associé au déclencheur 30.

Par exemple, l'unité 20 est programmée pour ordonner un déclenchement du bloc de coupure 4, c'est-à-dire une séparation des contacts 12 et 14, lorsqu'un défaut est détecté, par exemple lorsqu'un critère de déclenchement prédéfini est atteint. A titre d'exemple, un déclenchement est ordonné lorsqu'un courant mesuré par les capteurs 16 dépasse un seuil de déclenchement long retard « Ir » prédéfini ou un seuil de déclenchement court retard « lsd » prédéfini. Ce déclenchement est assuré par l'intermédiaire du mécanisme 22.

A titre d'exemple, l'unité 20 comporte un microcontrôleur programmable et une mémoire informatique qui stocke des instructions logicielles exécutables, préférentiellement sous une forme non-transitoire.

Le système 6 est également adapté pour commander le déclenchement du système 30 lorsqu'un défaut électrique est détecté, ce défaut électrique pouvant être d'un type différent du défaut électrique déclenchant l'unité 20.

Selon des modes de mise en œuvre de l'invention, le système 6 comporte à cet effet une unité de commande auxiliaire 26 électronique qui est programmée pour commander le déclenchement du système 30, ici par l'intermédiaire du circuit d'allumage 28, lorsqu'un défaut électrique est détecté.

L'unité de commande auxiliaire 26 comporte ici un circuit intégré ou un microcontrôleur programmable.

Par exemple, l'unité de commande auxiliaire 26 est connectée aux capteurs 16 par l'unité 18, la détection de défaut électrique est réalisée à partir des mesures fournies par les capteurs 16.

De préférence, l'unité de commande auxiliaire 26 commande également le déclenchement du mécanisme 22 en même temps qu'elle commande le déclenchement du système d'actionnement pyroélectrique 30.

L'utilisation d'une unité de commande auxiliaire 26 indépendante de l'unité 20 permet avantageusement de définir un seuil de déclenchement différent de ceux utilisés par l'unité 20, par exemple avec un calibre différent.

Par exemple, on utilise un seuil de déclenchement basé sur une valeur seuil de d'intensité crête ou sur une valeur seuil de dérivée temporelle de l'intensité du courant électrique.

Toutefois, selon des variantes de l'invention, l'unité de commande auxiliaire 26 est omise. Le déclenchement du système 30 est alors commandé par l'unité de commande principale 20. Le système 6 est alors adapté en conséquence. Selon d'autres variantes, les unités 20 et 26 peuvent recevoir des informations de défauts électriques extérieurs à l'appareil 2, notamment des défauts électriques détectés par des détecteurs d'arc électriques se produisant sur des conducteurs connectés audit appareil. Ces informations donnant lieu à des commandes de déclenchement du système 30 par l'intermédiaire du circuit d'allumage 28.

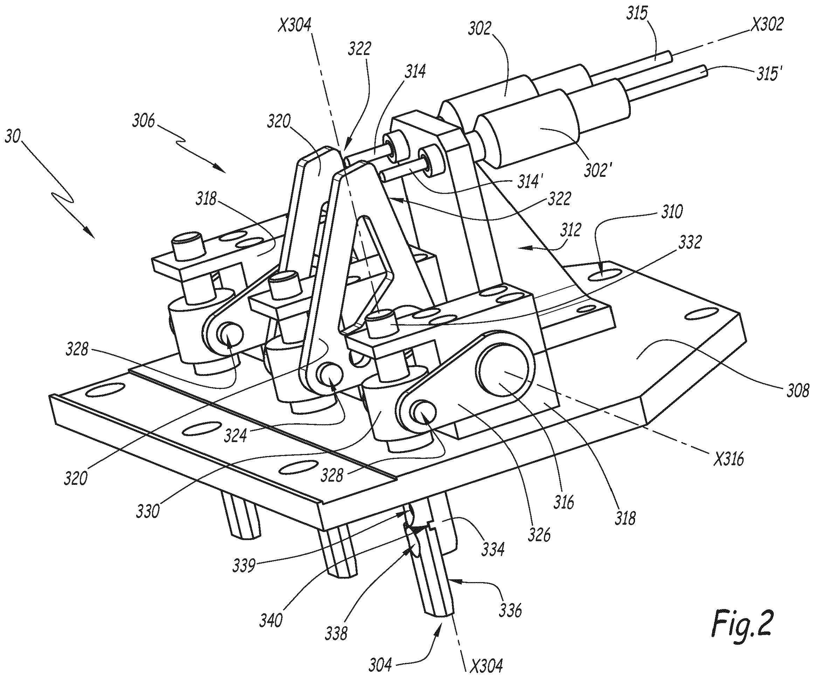

Les figures 2 à 5 représentent plus en détail un exemple du système 30 et de son agencement par rapport au reste de l'appareil 2.

Le système d'actionnement pyroélectrique 30 inclut au moins un actionneur pyrotechnique 302, des percuteurs 304 et un système de transmission de mouvement 306 et comporte ici une plaque de support 308.

De préférence, le système 30 est intégré dans l'appareil 2 en étant monté sur une face extérieure 40 d'un boîtier entourant le bloc de coupure 4.

Par exemple, le bloc de coupure 4 fait partie d'un ensemble unitaire constituant un appareillage de protection électrique. En d'autres termes, le système d'actionnement pyroélectrique 30 est alors un dispositif préassemblé qui est rapporté sur un appareillage préexistant, tel qu'un corps de disjoncteur.

Dans une configuration assemblée de l'appareil 2, la plaque 308 est fixée sur la face extérieure 40. La plaque 308 est ici percée de trous qui permettent le passage des percuteurs 304. La plaque 308 est également pourvue de trous supplémentaires 310 permettant le passage d'éléments de fixation, tels que des vis.

De préférence, la plaque 308 est réalisée en un matériau électriquement isolant. Par exemple, on utilise une matière plastique. De préférence, la plaque 308 est rigide.

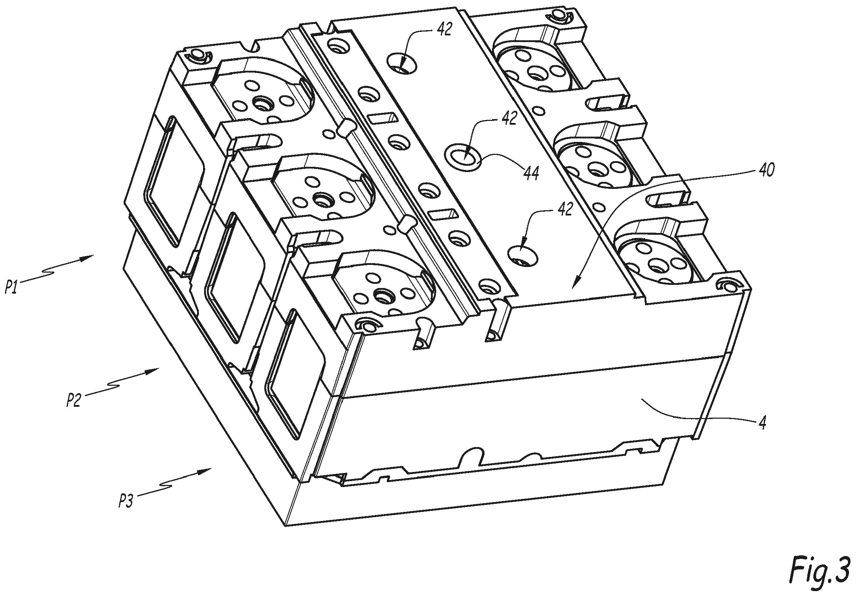

Comme cela ressort plus particulièrement de la figure 3, la face extérieure 40 est pourvue d'orifices traversants 42. Chaque orifice 42 est placé en regard d'un doigt de contact 15 et autorise le passage d'un percuteur 304 correspondant.

En d'autres termes, le bloc de coupure 4 ne comporte de préférence pas d'éléments disposés entre un orifice 42 et le doigt 15 correspondant qui seraient susceptibles de faire obstacle à la course du percuteur 304.

De préférence, chaque orifice 42 est pourvu d'un joint d'étanchéité 44, tel qu'un joint torique, par exemple en matériau élastomère. Cela permet de conserver une étanchéité satisfaisante du bloc de coupure 4, notamment en empêchant que des gaz de coupure ne puissent fuir hors du bloc de coupure 4 par les orifices 42.

Le système 30 est maintenant décrit en détail en référence aux figures 2, 4 et 5.

Dans cet exemple, le système 30 contient deux actionneurs pyrotechniques qui portent les références 302 et 302'. Dans la mesure où le rôle et la structure de ces actionneurs sont analogues, seul l'actionneur 302 est décrit dans ce qui suit. Les éléments de l'actionneur 302' qui correspondent à ceux de l'actionneur 302 portent la même référence numérique, augmentée du symbole « ' ».

Chaque actionneur pyrotechnique 302 comporte :
- une charge explosive, ici logée dans un corps fermé de l'actionneur, et
- une partie mobile 314 déplaçable entre une position rétractée et une position déployée, par exemple en se déplaçant par un mouvement de translation le long d'un axe longitudinal X302. De par la construction de l'actionneur 302, la partie mobile 314 se déplace depuis la position rétractée vers la position déployée lorsque la charge explose.

Selon des exemples de réalisation, la partie mobile 314 est une tige rigide montée coulissante par rapport au corps de l'actionneur 302.

Les actionneurs 302, 302' sont connectés au système 6 en vue de permettre le déclenchement du système 30. En d'autres termes, pour déclencher le système 30, le système 6 active l'un des actionneurs 302, 302' en mettant à feu sa charge explosive pour déplacer la partie mobile 314 correspondante.

Par exemple, chaque actionneur 302 comporte une ou plusieurs électrodes de commande 315 pour commander la mise à feu de la charge explosive. Les électrodes de commande 315 sont ici connectées au circuit d'allumage 28.

Le circuit d'allumage 28 est configuré de sorte que, lorsqu'il reçoit un ordre de déclenchement de la part du système 6, il envoie une quantité d'énergie électrique suffisante vers l'actionneur 302, 302' correspondant pour faire exploser la charge explosive. Le circuit 28 est alimenté électriquement par une source d'énergie embarquée dans l'appareil 2 ou par une source d'énergie extérieure à l'appareil 2.

Les actionneurs sont ici montés sur une pièce de maintien 312 qui est fixée sur la plaque de support 308. Par exemple, la pièce 312 présente une forme en « L » dont la base est fixée sur la plaque 308, les actionneurs 302, 302' étant fixés au sommet de la pièce 312.

Les percuteurs 304, aussi nommés « pistons de percussion » ou « marteaux », sont destinés à percuter les doigts 15 pour séparer les contacts 12, 14 lorsque l'un des actionneurs 302, 302' est activé, c'est-à-dire lorsque sa charge explose.

A cet effet, les percuteurs 304 sont placés en regard des doigts de contact 15.

Chaque percuteur 304 est déplaçable, de préférence réversiblement, entre une position de repos et une position appuyée.

Dans la position appuyée, le percuteur 304 pousse un doigt de contact 15 pour séparer le contact mobile 14 correspondant des contacts fixes 12.

Dans la position de repos, le percuteur ne pousse pas de doigt de contact 15. Par exemple, le percuteur 304 est maintenu à distance du doigt de contact 15 avec lequel il est associé.

Dans une configuration montée de l'appareil 2, chaque percuteur 304 passe au travers d'un des orifices 42. On comprend ainsi qu'en pratique, les percuteurs 304 sont destinés à pénétrer à l'intérieur du bloc de coupure 4.

Le nombre de percuteurs 304 est choisi en fonction du nombre de pôles P1, P2, P3 et du nombre de doigts 15. De préférence, on utilise un percuteur 304 pour chaque pôle P1, P2, P3. Ainsi, dans cet exemple, les percuteurs 304 sont au nombre de trois.

Le système de transmission de mouvement 306 est configuré pour transformer le déplacement d'une partie mobile 314, 314' depuis sa position rétractée vers sa position déployée en un déplacement simultané de l'ensemble des percuteurs 304 depuis leur position de repos vers leur position appuyée.

Dans l'exemple illustré, le système de transmission de mouvement 306 comporte un arbre 316, des paliers 318, des bielles 326 et au moins un levier 320.

De préférence, le système 306 est installé du même côté de la plaque de support 308 que les actionneurs 302, 302'. Le côté opposé de la plaque 308 est en contact avec la face extérieure 40.

L'arbre 316 s'étend ici selon un axe longitudinal X316. Il est monté en rotation par rapport aux paliers 318. Par exemple, l'arbre 316 est réalisé en acier. A titre d'exemple, son diamètre est compris entre 1cm et 2cm.

Les paliers 318, ici au nombre de trois, sont fixés sur la plaque de support 308, par exemple à l'aide d'éléments de fixation 319, tel que des vis. A titre d'exemple illustratif, les éléments de fixation 319 sont des vis cylindriques hexagonales creuses, par exemple de taille 4x16.

Le nombre de leviers 320 est adapté en fonction du nombre d'actionneurs pyrotechniques 302, 302'. On comprend qu'il faut un levier 320 pour chaque actionneur pyrotechnique 302, 302'.

Chaque levier 320 est fixé à l'arbre 316 sans degré de liberté, par exemple par soudage. Chaque levier 320 est pourvu d'une surface d'appui 322 destinée à coopérer avec la partie mobile 314, 314' d'un actionneur pyrotechnique 302, 302'.

Les bielles 326 relient les percuteurs 304 à l'arbre 316. Par exemple, chaque bielle relie un percuteur 304 à l'arbre 316 au moyen d'une liaison pivot 328. A titre d'exemple, la fixation au niveau de cette liaison pivot 328 est assurée par serrage au moyen de circlips.

Dans cet exemple, les leviers 320 jouent également le rôle de bielle pour connecter un percuteur 304 à l'arbre 316. Cela permet de réduire le nombre de pièces mécaniques mises en jeu et donc de simplifier la construction du système 6.

Par exemple, chaque levier 320 incorpore une portion en forme de bielle destinée à jouer un rôle analogue aux bielles 326. Ils relient donc, de façon analogue, un percuteur 304 à l'arbre 316 ici au moyen d'une liaison pivot 324.

Dans l'exemple illustré, le percuteur central 304 est connecté à l'arbre 316 par l'intermédiaire de deux leviers 320 identiques disposés de part et d'autre de ce percuteur 304. Chacun des deux percuteurs 304 latéraux est connecté à l'arbre 316 par deux bielles 326 disposées elles aussi de part et d'autre du percuteur 304 correspondant.

D'autres configurations sont toutefois possibles, notamment lorsque le nombre d'actionneurs pyrotechniques 302, 302' et/ou le nombre de percuteurs 304 est différent.

Selon des variantes non illustrées, les leviers 320 ne jouent pas nécessairement le rôle de bielle et ne sont donc pas attachés aux percuteurs 304. Des bielles dédiées sont alors utilisées à cette fin.

Selon des modes de mise en œuvre de l'invention, le système 306 comporte également un organe de rappel élastique, non illustré, adapté pour exercer une force de rappel qui ramène les percuteurs 304 vers leur position de repos.

Par exemple, cet organe de rappel est un ressort, tel qu'un ressort hélicoïdal de torsion qui coopère avec l'arbre 316.

En pratique, cette force de rappel n'est pas suffisante pour s'opposer au déplacement de l'arbre 316 et des percuteurs 304 sous l'effet de la partie mobile 314 lorsque cette partie mobile 314 est propulsée vers sa position déployée sous l'effet de l'explosion de la charge explosive d'un actionneur 302. En revanche, la force de rappel est suffisante pour ramener les percuteurs 304 vers leur position de repos lorsque le mouvement de propulsion de la partie mobile 314 a pris fin.

Chaque percuteur 304 présente ici une forme allongée s'étendant selon un axe longitudinal X304. Par exemple, les percuteurs 304 ont chacun une forme essentiellement cylindrique.

Le déplacement de chaque percuteur 304 s'effectue par translation selon son axe longitudinal X304. Par exemple, les axes X304 s'étendent essentiellement perpendiculairement à la plaque 308 et à la face 40.

Les percuteurs 304 sont ici identiques entre eux.

A titre d'exemple illustratif, l'axe X302 est ici perpendiculaire aux axes X304 et X316 et est coplanaire avec l'axe X304. L'axe X316 est perpendiculaire aux axes X304 et X302 sans être coplanaire avec aucun de ces deux axes.

Selon des modes de réalisation, chaque percuteur 304 comporte un corps principal 334, aussi nommé « fût », et une partie d'extrémité 336, aussi nommée « partie de percussion », qui est solidaire du corps principal 304 et qui est destinée à percuter un doigt de contact 15 correspondant lorsque le percuteur 304 arrive dans sa position appuyée.

La référence 332 désigne l'extrémité proximale du percuteur 304, cette extrémité se situant à l'opposé de la partie d'extrémité 336.

Dans cet exemple, chaque percuteur 304 comporte en outre une portion d'attache 330 sur laquelle sont formées les liaisons pivot 324, 328 avec la bielle 326 ou la pièce 320. Cette portion 330 est par exemple formée d'un seul tenant avec le corps principal 334.

De préférence, la partie d'extrémité 336 est réalisée en métal, tel que de l'acier. Cela permet d'assurer une bonne tenue mécanique de la partie d'extrémité 336, dans la mesure où c'est elle qui est destinée à venir percuter les doigts 15.

Avantageusement, le corps principal 334 est réalisé en un matériau électriquement isolant. Cela limite le risque de passage non désiré du courant électrique vers l'extérieur du bloc de coupure 4. Par exemple, le corps principal 334 est réalisé en polyamide ou en polycarbonate renforcé avec des fibres de verre.

Dans cet exemple, la partie d'extrémité 336 et le corps principal 334 sont deux pièces différentes fixées l'un à l'autre au moyen d'éléments de fixation 338, 339 disposés transversalement par rapport à l'axe longitudinal X304. Les éléments de fixation 338, 339 sont par exemple des vis à tête fraisée.

Selon des modes de mise en œuvre avantageux, l'extrémité distale du corps principal 334 comporte un épaulement 340 formant une surface d'appui sur laquelle est reçue l'extrémité correspondante de la partie d'extrémité 336, c'est-à-dire l'extrémité proximale de la partie 336.

De cette manière, lorsque le percuteur 304 percute le doigt 15, la partie d'extrémité 336 vient en butée contre la surface d'appui de l'épaulement 340. On évite ainsi que la partie d'extrémité 336 n'exerce un effort mécanique en cisaillement sur les éléments de fixation 338, 339, par exemple sur la tige des vis, car cela pourrait conduire à une rupture des éléments de fixation 338, 339. Ainsi, la durabilité du percuteur 304, et donc de l'appareil 2, sont augmentées.

Selon des modes de mise en œuvre avantageux, le système d'actionnement 30 est réarmable, c'est-à-dire qu'il peut être déclenché plusieurs fois d'affilée, quand bien même chaque actionneur 302, 302' est à usage unique.

Pour ce faire, le système 30 comporte au moins deux actionneurs pyrotechniques 302, 302'. Le système de déclenchement 6 est alors configuré pour, lorsqu'il détecte le défaut électrique de type courant de court-circuit, activer un actionneur pyrotechnique 302, 302' parmi le ou les actionneurs pyrotechniques 302, 302' qui n'ont pas déjà été activés.

Par exemple, l'activation des actionneurs est réalisée suivant un ordre prédéfini. Alternativement, le système 6 conserve en mémoire la liste des actionneurs qui ont été déjà activés lors de précédents déclenchements.

Selon d'autres modes de mise en œuvre, le système de déclenchement 6 est configuré pour que le déclenchement du système 30, suite à la détection d'un défaut électrique, comporte l'activation simultanée de plusieurs actionneurs pyrotechniques 302, 302'. Cela est utile dans les cas où une force importante est nécessaire pour déplacer le doigt 15 par percussion et où un actionneur pyrotechnique 302, 302' pris individuellement n'est pas apte à fournir une force suffisante.

Selon des exemples de mise en œuvre, les actionneurs 302, 302' sont montés de façon amovible. Ils peuvent ainsi être remplacés une fois qu'ils ont été activés.

Le nombre d'actionneurs 302, 302' peut être différent, par exemple égal à trois.

Un exemple de fonctionnement de l'appareil 2 est maintenant décrit, dans le cas de l'apparition défaut électrique de type courant de court-circuit.

On comprend notamment que le système 30 n'est pas nécessairement activé si un défaut électrique se produit pour lequel une réponse ultra rapide n'est pas nécessaire, par exemple un défaut de type courant de surcharge. Dans de tels cas, le fonctionnement du système 6 et du mécanisme 22 peut être suffisant.

Initialement, l'appareil 2 est dans l'état illustré à la figure 4. L'appareil 2 est dans un état fermé. Les contacts 12 et 14 sont en contact l'un avec l'autre, autorisant ainsi le passage du courant. Le mécanisme 22 est armé et prêt à être déclenché. De même, le système 30 est armé et près à être déclenché. Aucun des actionneurs 302, 302' n'est activé.

Ensuite, un défaut électrique est détecté par le système 6, grâce aux courants mesurés par les capteurs 16. En réponse, le système 6 commande le déclenchement du système 30.

Avantageusement, le système 6 choisit automatiquement lequel des actionneurs 302 ou 302' va être activé. Par exemple, l'actionneur 302 est choisi.

Dans l'exemple illustré, le déclenchement est assuré grâce à l'unité de commande auxiliaire 26.

Le circuit d'allumage 28 met à feu la charge explosive correspondante en envoyant une quantité d'énergie électrique prédéfinie sur l'électrode 315.

L'explosion de la charge entraîne un déplacement rapide de la partie mobile 314 le long de l'axe X314. La partie mobile 314 pousse le levier 320 et fait tourner l'arbre 316 autour de l'axe X316, comme illustré par la flèche F1 sur la figure 4, ce qui entraîne un déplacement simultané des percuteurs 304 le long de l'axe X304.

Les percuteurs 304 poussent violemment les doigts de contact 15 en les éloignant, comme illustré par la flèche F2. Les contacts électriques 12, 14 sont alors séparés et la circulation du courant électrique est interrompue.

En pratique, il peut se former un arc électrique entre les contacts 12 et 14 lors de leur séparation, mais celui-ci s'éteint rapidement. Il s'éteint d'autant plus rapidement que la séparation des contacts 12 et 14 intervient à un stade suffisamment précoce où l'intensité du courant n'est pas suffisamment élevée pour que l'arc perdure longuement.

En tout état de cause, le bloc de coupure 4 est avantageusement pourvu d'une chambre d'extinction d'arc électrique.

L'appareil 2 est alors dans un état ouvert, comme illustré sur la figure 5.

De préférence, lorsque le système 6 a commandé le déclenchement du système 30, il a également commandé le déclenchement du mécanisme 22. Cela permet de maintenir les contacts 12 et 14 éloignés l'un de l'autre à l'issue de l'action du système 30.

En effet, en pratique, dans certains modes de mise en œuvre, l'action des percuteurs 304 est suffisante pour déplacer les doigts 15 et donc séparer les contacts 12, 14. Mais, il existe un risque que les doigts 15 reviennent dans leur position initiale une fois que la partie mobile 314 a terminé son déplacement.

Grâce à l'invention, le système d'actionnement pyroélectrique 30 permet d'assurer une coupure du courant ultra-rapide, c'est-à-dire avec un temps de réaction inférieur ou égal à 1 milliseconde, après que le défaut électrique ait été détecté par le système 6.

Le système 30 forme un système de déclenchement additionnel qui complète l'association traditionnelle du module 20 et du mécanisme 22, dans les cas où celle-ci n'est pas assez rapide pour avoir un temps de réaction inférieur ou égal à 1 milliseconde.

De plus, l'appareil 2 conserve en partie l'architecture classique des disjoncteurs, notamment en ce qui concerne le bloc de coupure 4.

Cette réutilisation de l'architecture standard des appareillages de coupure de type disjoncteur facilite l'industrialisation de l'appareil 2. En particulier, le système 30 peut être fabriqué en tant que module préassemblé. Cela est particulièrement intéressant lorsque l'appareil 2 est destiné à être fabriqué en petites séries, pour lesquelles le coût de développement et de commercialisation serait autrement prohibitif si un redéveloppement complet devait être entrepris.

Les modes de réalisation et les variantes envisagés ci-dessus peuvent être combinés entre eux pour générer de nouveaux modes de réalisation.

## Revendications

1. Appareil de protection électrique (2) multipolaire comportant :
- un bloc de coupure (4) à contacts séparables, destiné à interrompre la circulation d'un courant électrique entre des terminaux de raccordement (8, 10), ce bloc de coupure (4) comportant, pour chaque pôle (P1, P2, P3) de l'appareil de protection (2), des contacts électriques fixes (12) et un contact électrique mobile (14) porté par au moins un doigt de contact (15) déplaçable ;
- un mécanisme de commutation (22) apte à déplacer les doigts de contact ;
- un système de déclenchement (6) électronique qui pilote le mécanisme de commutation (22), ce système de déclenchement (6) étant configuré pour déclencher le mécanisme de commutation (22) lorsqu'il détecte un défaut électrique ;
l'appareil de protection (2) étant **caractérisé en ce qu'**il comporte en outre un système d'actionnement pyrotechnique (30) incluant :
- au moins un actionneur pyrotechnique (302, 302'), chaque actionneur pyrotechnique comportant une charge explosive et une partie mobile (314, 314') qui se déplace depuis une position rétractée vers une position déployée lorsque la charge explose ;
- des percuteurs (304) placés en regard des doigts de contact (15), chaque percuteur (304) étant déplaçable entre une position de repos et une position appuyée dans laquelle il pousse un doigt de contact (15) pour séparer le contact mobile (14) correspondant des contacts fixes (12) ;
- un système de transmission de mouvement (306) configuré pour transformer le déplacement de la partie mobile (314, 314') de sa position rétractée vers sa position déployée en un déplacement simultané de l'ensemble des percuteurs (304) depuis leur position de repos vers leur position appuyée ;
et **en ce que** le système de déclenchement (6) est en outre configuré pour activer un des actionneurs pyrotechniques (302, 302') lorsqu'il détecte un défaut électrique.

2. Appareil de protection électrique (2) selon la revendication 1, **caractérisé en ce que** le système d'actionnement pyrotechnique (30) est réarmable et comporte à cet effet au moins deux actionneurs pyrotechniques (302, 302'), le système de déclenchement (6) étant en outre configuré pour, lorsqu'il détecte le défaut électrique, activer un actionneur pyrotechnique (302, 302') parmi le ou les actionneurs pyrotechniques (302, 302') qui n'ont pas déjà été activés.

3. Appareil de protection électrique (2) selon l'une quelconque des revendications précédentes, **caractérisé en ce que** le système de déclenchement (6) comporte une unité de commande principale (20) et une unité de commande auxiliaire (26), le pilotage du mécanisme de commutation (22) étant assuré par l'unité de commande principale (20) et l'activation d'un des actionneurs pyrotechniques (302, 302'), en réponse à la détection d'un défaut électrique, étant réalisé par l'unité de commande auxiliaire (26).

4. Appareil de protection électrique (2) selon l'une quelconque des revendications précédentes, **caractérisé en ce que** le système de transmission de mouvement (306) comporte :
- un arbre (316) monté en rotation par rapport à un palier (318) fixé sur un support (308) du système d'actionnement pyrotechnique (30) ;
- des bielles (320, 326) qui relient les percuteurs (304) à l'arbre (316) ; et
- au moins un levier (320) fixé à l'arbre (316), chaque levier (320) étant pourvu d'une surface d'appui (322) destinée à coopérer avec la partie mobile (314, 314') d'un actionneur pyrotechnique (302, 302').

5. Appareil de protection électrique (2) selon l'une quelconque des revendications précédentes, **caractérisé en ce que** le système d'actionnement pyrotechnique (30) est monté sur une face extérieure (40) d'un boîtier entourant le bloc de coupure (4), **en ce que** la face extérieure (40) est pourvue d'orifices traversants (42) et **en ce que** chaque orifice (42) est placé en regard d'un doigt de contact (15) du bloc de coupure (4) et autorise le passage d'un percuteur (304) correspondant.

6. Appareil de protection électrique (2) selon la revendication 5, **caractérisé en ce que** chaque orifice (42) est pourvu d'un joint d'étanchéité (44).

7. Appareil de protection électrique (2) selon l'une quelconque des revendications précédentes, **caractérisé en ce que** chaque percuteur (304) comporte un corps principal (334) et une partie d'extrémité (336) solidaire du corps principal (304) et destinée à percuter un doigt de contact (15) correspondant lorsque le percuteur (304) se déplace vers sa position appuyée, le corps principal (334) étant électriquement isolant.

8. Appareil de protection électrique (2) selon la revendication 7, **caractérisé en ce que** chaque percuteur (304) présente une forme allongée s'étendant selon un axe longitudinal (X304), **en ce que** l'extrémité distale du corps principal (334) comporte un épaulement (340) formant une surface d'appui sur laquelle est reçue l'extrémité correspondante de la partie d'extrémité (336), la partie d'extrémité (336) et le corps principal (334) étant fixés l'un à l'autre au moyen d'éléments de fixation (338, 339) disposés transversalement par rapport à l'axe longitudinal (X304).

9. Appareil de protection électrique (2) selon la revendication 7 ou 8, **caractérisé en ce que** la partie d'extrémité (336) est réalisée en métal, de préférence en acier.

10. Appareil de protection électrique (2) selon l'une quelconque des revendications précédentes, **caractérisé en ce que** le système de transmission de mouvement (306) comporte un organe de rappel élastique, tel qu'un ressort, adapté pour exercer une force de rappel qui ramène les percuteurs (304) vers leur position de repos.

## Patentansprüche

1. Mehrpolige elektrische Schutzeinrichtung (2), umfassend:
- eine Unterbrecherbaugruppe (4) mit trennbaren Kontakten, die dazu bestimmt ist, den Fluss eines elektrischen Stroms zwischen Anschlussklemmen (8, 10) zu unterbrechen, wobei die Unterbrecherbaugruppe (4), für jeden Pol (P1, P2, P3) der elektrischen Schutzeinrichtung (2), unbewegliche elektrische Kontakte (12) und einen beweglichen elektrischen Kontakt (14) aufweist, der von mindestens einem bewegbaren Kontaktfinger (15) getragen wird;
- einen Umschaltmechanismus (22), der ausgebildet ist, die Kontaktfinger zu bewegen;
- ein elektronisches Auslösesystem (6), das den Umschaltmechanismus (22) ansteuert, wobei das Auslösesystem (6) eingerichtet ist, um den Umschaltmechanismus (22) auszulösen, wenn es einen elektrischen Fehler detektiert;
wobei die Schutzeinrichtung (2) **dadurch gekennzeichnet ist, dass** sie ferner ein pyrotechnisches Betätigungssystem (30) aufweist, umfassend:
- mindestens einen pyrotechnischen Aktuator (302, 302'), wobei jeder pyrotechnische Aktuator eine Sprengladung und einen beweglichen Anteil (314, 314') aufweist, der sich aus einer eingezogenen Position in eine ausgezogene Position bewegt, wenn die Ladung explodiert;
- Schlagbolzen (304), die den Kontaktfingern (15) gegenüberliegend angeordnet sind, wobei jeder Schlagbolzen (304) bewegbar ist zwischen einer Ruhestellung und einer Abstützstellung, in der er den Kontaktfinger (15) drückt, um den entsprechenden beweglichen Kontakt (14) von den unbeweglichen Kontakten (12) zu trennen;
- ein Bewegungsübertragungssystem (306), das eingerichtet ist, um die Versetzung des beweglichen Anteils (314, 314') aus seiner eingezogenen Position in seine ausgezogene Position in eine gleichzeitige Versetzung der Schlagbolzen (304) aus ihrer Ruhestellung in ihre Abstützstellung umzuwandeln;
und dass das Auslösesystem (6) ferner eingerichtet ist, um einen der pyrotechnischen Aktuatoren (302, 302') zu aktivieren, wenn es einen elektrischen Fehler detektiert.

2. Elektrische Schutzvorrichtung (2) nach Anspruch 1, **dadurch gekennzeichnet, dass** das pyrotechnische Betätigungssystem (30) nachladbar ist und zu diesem Zweck wenigstens zwei pyrotechnische Aktuatoren (302, 302') aufweist, wobei das Auslösesystem (6) ferner eingerichtet ist, um, wenn es den elektrischen Fehler detektiert, einen pyrotechnischen Aktuator (302, 302') aus dem einen oder den pyrotechnischen Aktuatoren (302, 302'), die noch nicht aktiviert wurden, zu aktivieren.

3. Elektrische Schutzvorrichtung (2) nach einem der vorhergehenden Ansprüche, **dadurch gekennzeichnet, dass** das Auslösesystem (6) eine Hauptsteuereinheit (20) und eine Hilfssteuereinheit (26) aufweist, wobei das Ansteuern des Umschaltmechanismus (22) durch die Hauptsteuereinheit (20) bewirkt wird, und wobei die Aktivierung einer der pyrotechnischen Aktuatoren (302, 302'), als Reaktion auf die Detektion eines elektrischen Fehlers, durch die Hilfssteuereinheit (26) realisiert wird.

4. Elektrische Schutzvorrichtung (2) nach einem der vorhergehenden Ansprüche, **dadurch gekennzeichnet, dass** das Bewegungsübertragungssystem (306) umfasst:
- eine Welle (316), die relativ zu einem Lager (318), das auf einem Träger (308) des pyrotechnischen Betätigungssystems (30) befestigt ist, drehbar gelagert ist;
- Pleuel (320, 326), welche die Schlagbolzen (304) mit der Welle (316) verbinden; und
- mindestens einen Hebel (320), der an der Welle (316) befestigt ist, wobei jeder Hebel (320) mit einer Abstützfläche (322) versehen ist, die für das Zusammenwirken mit dem beweglichen Anteil (314, 314') eines pyrotechnischen Aktuators (302, 302') bestimmt ist.

5. Elektrische Schutzvorrichtung (2) nach einem der vorhergehenden Ansprüche, **dadurch gekennzeichnet, dass** das pyrotechnische Betätigungssystem (30) auf einer Außenfläche (40) eines Gehäuses, das die Unterbrecherbaugruppe (4) umgibt, angeordnet ist, dass die Außenfläche (40) mit durchgehenden Öffnungen (42) versehen ist und dass jede Öffnung (42) einem Kontaktfinger (15) der Unterbrecherbaugruppe (4) gegenüberliegend angeordnet ist und den Durchtritt eines entsprechenden Schlagbolzens (304) gestattet.

6. Elektrische Schutzvorrichtung (2) nach Anspruch 5, **dadurch gekennzeichnet, dass** jede Öffnung (42) mit einem Dichtungselement (44) versehen ist.

7. Elektrische Schutzvorrichtung (2) nach einem der vorhergehenden Ansprüche, **dadurch gekennzeichnet, dass** jeder Schlagbolzen (304) einen Hauptkörper (334) und einen Endteil (336) aufweist, der mit dem Hauptkörper (334) fest verbunden ist und dazu bestimmt ist, auf einen entsprechenden Kontaktfinger (15) aufzuschlagen, wenn der Schlagbolzen (304) sich in seine Abstützstellung verschiebt, wobei der Hauptkörper (334) elektrisch isoliert ist.

8. Elektrische Schutzvorrichtung (2) nach Anspruch 7, **dadurch gekennzeichnet, dass** jeder Schlagbolzen (304) eine langgezogene Form aufweist, die sich gemäß einer Längsachse (X304) erstreckt, dass das distale Ende des Hauptkörpers (334) eine Schulter (340) aufweist, die eine Abstützfläche bildet, auf der das entsprechende Ende des Endteils (336) aufgenommen ist, wobei der Endteil (336) und der Hauptkörper (334) mittels Befestigungselementen (338, 339) aneinander befestigt sind, die quer zu der Längsachse (X304) angeordnet sind.

9. Elektrische Schutzvorrichtung (2) nach Anspruch 7 oder 8, **dadurch gekennzeichnet, dass** der Endteil (336) aus Metall, vorzugsweise aus Stahl ist.

10. Elektrische Schutzvorrichtung (2) nach einem der vorhergehenden Ansprüche, **dadurch gekennzeichnet, dass** das Bewegungsübertragungssystem (306) ein elastisches Rückstellmittel, wie eine Feder, aufweist, das eingerichtet ist, um eine Rückstellkraft auszuüben, welche die Schlagbolzen (304) in ihre Ruhestellung zurückbringt.

## Claims

1. Multipolar electrical protection apparatus (2) comprising:
- a cut-off block (4) with separable contacts for interrupting the flow of an electric current between connection terminals (8, 10), the cut-off block (4) comprising, for each pole (P1, P2, P3) of the protection apparatus (2), fixed electrical contacts (12) and a movable electrical contact (14) carried by at least one displaceable contact finger (15);
- a switching mechanism (22) capable of displacing the contact fingers;
- an electronic triggering system (6) which controls the switching mechanism (22), the triggering system (6) being configured to trigger the switching mechanism (22) when it detects an electrical fault;
the protection apparatus (2) being **characterised in that** it further comprises a pyrotechnic actuating system (30) including:
- at least one pyrotechnic actuator (302, 302'), each pyrotechnic actuator comprising an explosive charge and a movable part (314, 314') which is displaced from a retracted position to a deployed position when the charge explodes;
- striking pins (304) situated opposite the contact fingers (15), each striking pin (304) being displaceable between a rest position and a pressed position in which it pushes a contact finger (15) in order to separate the corresponding movable contact (14) from the fixed contacts (12);
- a movement transmission system (306) configured to convert the displacement of the movable part (314, 314') from its retracted position to its deployed position into a simultaneous displacement of all the striking pins (304) from their rest position to their pressed position;
and **in that** the triggering system (6) is further configured to activate one of the pyrotechnic actuators (302, 302') when it detects an electrical fault.

2. Electrical protection apparatus (2) according to claim 1, **characterised in that** the pyrotechnic actuating system (30) is resettable and comprises for that purpose at least two pyrotechnic actuators (302, 302'), the triggering system (6) further being configured to activate a pyrotechnic actuator (302, 302') from among the pyrotechnic actuator(s) (302, 302') that have not already been activated when it detects the electrical fault.

3. Electrical protection apparatus (2) according to any one of the preceding claims, **characterised in that** the triggering system (6) comprises a main control unit (20) and an auxiliary control unit (26), control of the switching mechanism (22) being provided by the main control unit (20) and activation of one of the pyrotechnic actuators (302, 302'), in response to the detection of an electrical fault, being carried out by the auxiliary control unit (26).

4. Electrical protection apparatus (2) according to any one of the preceding claims, **characterised in that** the movement transmission system (306) comprises:
- a shaft (316) which is rotatably mounted relative to a bearing (318) fixed to a support (308) of the pyrotechnic actuating system (30);
- rods (320, 326) which connect the striking pins (304) to the shaft (316); and
- at least one lever (320) fixed to the shaft (316), each lever (320) being provided with a bearing surface (322) which is to cooperate with the movable part (314, 314') of a pyrotechnic actuator (302, 302').

5. Electrical protection apparatus (2) according to any one of the preceding claims, **characterised in that** the pyrotechnic actuating system (30) is mounted on an outer face (40) of a casing surrounding the cut-off block (4), **in that** the outer face (40) is provided with through-openings (42), and **in that** each opening (42) is located opposite a contact finger (15) of the cut-off block (4) and permits the passage of a corresponding striking pin (304).

6. Electrical protection apparatus (2) according to claim 5, **characterised in that** each opening (42) is provided with a seal (44).

7. Electrical protection apparatus (2) according to any one of the preceding claims, **characterised in that** each striking pin (304) comprises a main body (334) and an end portion (336) which is attached to the main body (304) and is to strike a corresponding contact finger (15) when the striking pin (304) is displaced into its pressed position, the main body (334) being electrically insulating.

8. Electrical protection apparatus (2) according to claim 7, **characterised in that** each striking pin (304) has an elongate shape extending along a longitudinal axis (X304), **in that** the distal end of the main body (334) comprises a shoulder (340) which forms a bearing surface on which the corresponding end of the end portion (336) is received, the end portion (336) and the main body (334) being fixed to one another by means of fixing elements (338, 339) arranged transversely with respect to the longitudinal axis (X304).

9. Electrical protection apparatus (2) according to claim 7 or 8, **characterised in that** the end portion (336) is made of metal, preferably of steel.

10. Electrical protection apparatus (2) according to any one of the preceding claims, **characterised in that** the movement transmission system (306) comprises a resilient return member, such as a spring, which is adapted to exert a return force which returns the striking pins (304) to their rest position.
